# EUROPEAN PATENT SPECIFICATION

(11) **EP 2 724 771 B1**
(45) Date of publication and mention of the grant of the patent: **09.09.2015**
(21) Application number: 12738146.5
(22) Date of filing: 07.06.2012
(51) Int. Cl.: B01D 53/62, B01D 53/83

(54) **DEVICE AND METHOD FOR THE CAPTURE OF CO2 BY CAO CARBONATION AND FOR MAINTAINING SORBENT ACTIVITY**
VORRICHTUNG UND VERFAHREN ZUR CO2-ABSCHEIDUNG DURCH CAO-KARBONISIERUNG UND ZUR BEWAHRUNG DER SORPTIONSWIRKUNG
DISPOSITIF ET PROCÉDÉ PERMETTANT LA CAPTURE DE CO2 PAR CARBONATATION DE CaO

(30) Priority: 24.06.2011 ES 201131062
(43) Date of publication of application: 30.04.2014
(73) Proprietor: Consejo Superior De Investigaciones Científicas (CSIC), 28006 Madrid (ES); Endesa Generación, S. A., 41004 Sevilla (ES); Hulleras del Norte, S.A., 33005 Oviedo (Asturias) (ES); Foster Wheeler Energía, S.A.U., 28230 Las Rozas (Madrid) (ES)
(72) Inventor: ABANADES GARCÍA, Juan Carlos, E-33011 Oviedo (Asturias) (ES); ARIAS ROZADA, Borja, E-50015 Zaragoza (ES); GRASA ADIEGO, Gemma, E-50015 Zaragoza (ES)
(74) Representative: Pons Ariño, Angel
(86) International application number: PCT/ES2012/070426
(87) International publication number: WO 2013/021082

(56) References cited:
- GB-A- 2 291 051
- US-A- 4 226 839
- SALVADOR C ET AL: "Enhancement of CaO for CO2 capture in an FBC environment", CHEMICAL ENGINEERING JOURNAL, ELSEVIER SEQUOIA, LAUSANNE, CH, vol. 96, 1 January 2003 (2003-01-01), pages 187-195, XP007903728, ISSN: 1385-8947, DOI: 10.1016/J.CEJ.2003.08.011

## Description

### OBJECT OF THE INVENTION

The present invention is included within the field of energy production from carbonaceous fuels with capture of carbon dioxide for its use or permanent storage. In particular, the present invention relates to devices and methods which enable the improved capture of CO₂ by CaO in calcination-carbonation processes (or "calcium looping"). The devices object of the invention are characterized in that they have a reactor, the recarbonator, where the partially carbonated solids from the carbonator are brought into contact with highly concentrated CO₂; so that the fraction of carbonate in the solids increases slightly above the effective CO₂ carrying capacity in the carbonator and said increase compensates for the loss of CO₂ carrying capacity that said solids undergo in the next calcination-carbonation cycle, thus checking the deactivation process in a higher value of CO₂ carrying capacity of the sorbent.

### BACKGROUND OF THE INVENTION

Currently, the generation of electricity from carbonaceous fuels is fundamentally carried out by combustion processes, which generate considerable amounts of CO₂, which is the main responsible for climate change. Therefore, different methods have been proposed in the state of the art for capture of the CO₂ released in these processes, among which those which are based on the reversible CaO and CaCO₃ carbonation-calcination reaction (also called "carbonate looping" or "calcium looping") can be highlighted, due to its theoretical advantages of low cost and low energy penalization.

CaO + CO₂ ↔ CaCO₃

This equilibrium has been previously used in CO₂ separation processes, especially in the hydrocarbon reforming and/or in H₂ production. For example, López-Ortiz and Harrison (Hydrogen production using sorption-enhanced reaction. Ind. Eng. Chem. Res.,40, 5102-5109, 2001) have experimentally demonstrated the application of the cited equilibrium to hydrogen production in a single methane reformer reactor with water vapour in the presence of CaO, and refer to a fair amount of patents and publications in this field of CO₂ separation in reducing atmospheres, which go back to 1868.

Shimizu et al.; (Shimizu et al. A twin fluid-bed reactor for removal of CO2 from combustion processes Trans IChemE A, 77, 62-68,1999) publish a method for the use of CaO as absorbent of the CO₂ from flue gases, with regeneration by continuous calcination of CaCO₃, to obtain a concentrated CO₂ stream. The system proposed uses dual interconnected fluidized beds as carbonator and calciner. The calciner uses the oxi-combustion of coal to supply the necessary heat to the endothermic step of CaCO₃ calcination to give CaO and CO₂. This concept has been successfully demonstrated recently on laboratory pilot plant scales (N. Rodriguez et al. Comparison of experimental results from three dual fluidized bed test facilities capturing CaO with CO2, Energy Procedia, 4, 393-401, 2011.), with tests wherein more than 90% of the CO₂ has been captured and solid conversions have been achieved in the carbonator very close to the maximum effective CO₂ carrying capacity in the carbonator, operating in conditions of temperatures, gas velocities, solid circulation rates and solid-gas contact times close to those expected on an industrial scale.

An important disadvantage of all previous systems of CO₂ capture with CaO is that the CaO shows a tendency towards the loss of effective CO₂ carrying capacity, X_{N}, (also called "maximum CO₂ carrying capacity" or "activity") as the number of calcination-carbonation cycles, N, increases. It is known that X_{N} marks the CO₂ absorption capacity which is obtained at the end of a rapid carbonation stage, since the following slow carbonation stage does not have practical applications in the typical reaction conditions in a carbonator reactor. It is also known that the tendency of X_{N} to decrease as N increases is highly accentuated when the CaO comes from natural precursors such as limestone or dolomite, which are most attractive due to their low cost.

However, it is also known that for very large N values, the effective CO₂ carrying capacity, X_{N}, does not tend to zero. Grasa et al. (CO2 capture capacity of CaO in long series of carbonation/calcination cycles, Ind. Eng. Chem. Res., 45, 8846-8851, 2006) have demonstrated that the drop of X_{N} with N when the CaO comes from natural limestone is checked at a residual value of effective CO₂ carrying capacity of 0.05-0.1 (mol CO₂ absorbed/mol CaO in the sorbent). In theory, it is possible to exploit these low residual activities and operate a carbonation-calcination system with sufficiently high solid circulation rates to compensate these low CO₂ carrying capacities of the sorbent. However, since there is a temperature difference between the carbonator and the calciner of around 300°C (Shimizu et al, 1999), the heat demand in the calciner (and therefore the associated energy consumption in the air separation plant which supplies pure oxygen to said calciner) increases to values that may be economically prohibitive. Another alternative described in the state of the art is the feed of high flow rate of fresh limestone to the CO₂ capture system, together with comparable bleeding of deactivated material. This resolves the problem of the average activity of solids in the system, but leads to high energy requirements and limestone consumption, which are only acceptable when there is the possibility of synergy with a large CaO consumer, such as a cement factory or similar. However, this synergy is not always possible.

Therefore, there is an interest in finding better CO₂ sorbents with CaO or in finding forms of low cost reactivation of the CaO deactivated in any carbonation-calcination process. Numerous proposals have been described in the state of the art of synthetic sorbents that demonstrate drastically reducing said tendency to deactivation (see recent revision of EJ Anthony: "Ca looping technology: current status, developments and future directions" Grennhouse Gas Sci and Technology 2011, 1, 36-47). However, said sorbents tend to be much more expensive than natural limestones and their replacement is not usually profitable, at least in methods conceived for their application to coal flue gases or other fuels with high impurity content. From the review of the state of the art, it can also be concluded that the use of additives (e.g. inorganic Na salts) has generated neither conclusive nor sufficiently positive results as regards the behaviour of natural sorbents.

In the state of the art there are CaO reactivation proposals by intermediate hydration steps located after the calcination step, forming Ca(OH)₂, which is capable of recovering a high degree of CO₂ absorption capacity in a later carbonation step. The main hydration processes have been recently reviewed by Smedley et al, which in WO 2009/148334A1 disclose one of these CaO regeneration processes by hydration, which makes use of hydration and dehydration steps at a high temperature, in the presence of CO₂, without deteriorating the mechanical properties of the sorbent. Anthony et al. disclosed in WO2005046862 (A1) a method and an apparatus to achieve a high degree of CaO reactivation from the calciner by its hydration and later carbonation (optional) and later second calcination (optional) before its feed back to a combustor-carbonator operated at high pressures and with high partial pressure of CO₂.

Furthermore, one of the methods proposed in WO2005046862 to achieve greater degrees of Carbonation of CaO consists of making use of the high pressure of CO₂ in the carbonation step when said reaction takes place in the pressurized fluidized bed combustion (PFBC/C). Although no conclusive data are presented, it is disclosed in this patent that at the partial high pressures of CO₂ and temperatures at which the carbonation is produced in the combustor (PFBC/C), it is possible to promote a greater degree of Carbonation of CaO. There is information in the prior art which directly confirms this tendency of improvement of the CO₂ absorption capacity by CaO when working at high temperatures and partial CO₂ pressures: Curran et al (Carbon dioxide-acceptor gasification process: studies of acceptor properties. Adv Chem Ser. 1967;69:141-165) brought about a fluidized bed gasifier where the carbonation takes place at a high partial CO₂ pressure and temperatures, and reported curves of X_{N} vs. N with values of X_{N} slightly higher than those reported in the literature in tests performed in environments at atmospheric pressure and low partial CO₂ pressure. Therefore, it is probable that the methods that operate with a pressurized carbonation step are going to be capable of working with CO₂ carrying capacities slightly better than the equivalent pressures at atmospheric pressure. But it is also evident that these methods at a high pressure are much less developed and are of of less practical interest nowadays than the CO₂ capture processes designed for flue gases from conventional power plants, which operate at a pressure close to atmospheric and generate flue gases diluted in CO₂, with partial CO₂ pressure of just 0.05-0.15 atmospheres.

Finally, the scientific papers related to the carbonation reaction mechanism are relevant for the object of this invention. Arias et al. (An analysis of the effect of carbonation conditions on CaO deactivation curves. Chem. Eng. Journal, 167, 255-261, 2010,) have shown that the application of a reaction model that describes the fast carbonation step, the slow step controlled by the diffusion and a transition step between both, is capable of adjusting experimental curves, X_{N} vs. N, of evolution of the CO₂ carrying capacity published by different authors, obtained in highly diverse carbonation reaction conditions. For example, this adjustment includes the data of Baker (R. Barker, Reversibility of the reaction CaCO3 = CaO + CO2, J. Appl. Chem. Biotechnol., 23, 733-742, 1973), which demonstrated that the drop in the CO₂ carrying capacity with the number of carbonation-calcination cycles is almost completely checked when the carbonation process is extended for very long time (24 hours in pure CO₂ at 866 °C). Processes are not known which may make use of such long gas-solid contact times, but the basis of this invention is largely based on the practical application of this last part of the state of the art.

Document US4226839 and document "Enhancement of CaO for CO2 capture in an FBC environment" CHEMICAL ENGINEERING JOURNAL, ELSEVIER SEQUOIA, LAUSANNE, CH vol. 96, 1 January 2003 (2003-01-01), pages 187-195, XP007903728, ISSN: 1385-8947, DOI: 10.1016/J.CEJ.2003.08.011 discloses a device for CO₂ capture by carbonation of CaO according to the preamble of claim 1.

In light of the above, there continues to be the need in the state of the art of providing a device and an alternative method to check the deactivation of the CaO used in CO₂ capture processes by calcination-carbonation, and be able to thus operate said processes in more favourable conditions from an energy and economic standpoint.

### DESCRIPTION OF THE INVENTION

The invention relates to a device for the capture of CO₂ by carbonation of CaO that comprises:
- a carbonator reactor comprising an inlet pipe for feeding flue gases and another inlet pipe for feeding a solid stream rich in CaO that comes from a calciner reactor, and
- a calciner reactor comprising an inlet pipe to introduce a stream of solids with CaCO₃ that are calcined to a solid stream rich in CaO and a gas stream concentrated in CO₂,
   where it includes a recarbonator reactor that comprises:
   an inlet pipe for feeding the stream of partially carbonated solids coming from the carbonator reactor,
   • another inlet pipe for feeding a concentrated CO₂ stream coming from the calciner reactor, in such a way that the carbonate fraction in the partially carbonated solids increases above the effective CO₂ carrying capacity of the solids in the carbonator, and
   • an outlet pipe for feeding the stream of recarbonated solids, from the recarbonator reactor to the calciner reactor.

The calciner further comprises other inlet pipes for the intake of a fuel and an oxidizing mixture rich in O₂-CO₂ to calcine the recarbonated solids from the recarbonator reactor and generate a concentrated flow of CO₂.

The recarbonator reactor may also be implemented in other systems related to calcination-carbonation processes, such as those applied in hydrogen production from natural gas or other hydrocarbons by steam reforming processes improved with the presence of CaO ("sorption enhanced reforming"), coal or biomass gasification processes in the presence of CaO or biomass combustion process with "in situ" capture of CaO.

The recarbonator reactor comprises at least a moving bed or fluidized bed reactor, which can be of bubbling or circulating type, or comprise a set of fluidized beds in series with respect to the stream of partially carbonated solids.

The invention also has the object of the method for CO₂ capture by carbonation of CaO comprising the steps of:
- carbonation of a solid stream rich in CaO that captures the CO₂ contained in a flue gas stream to form a partially carbonated solids stream,
- calcination of a solid stream with CaCO₃ by means of the combustion of a fuel in the presence of a mixture of O₂/CO₂
wherein a recarbonation step is introduced between the carbonation step and the calcination step where the partially carbonated solids stream obtained from the carbonation step is brought into contact with a concentrated CO₂ stream obtained from the calcination step in order to obtain a recarbonated solids stream with a carbonate fraction above the effective CO₂ carrying capacity of the solids in the carbonator reactor.

### DESCRIPTION OF THE DRAWINGS

To complete the description being made and in order to aid towards a better understanding of the features of the invention, in accordance with a preferred example of practical embodiment thereof, a set of drawings is attached wherein, with illustrative and non-limiting character, the following has been represented:

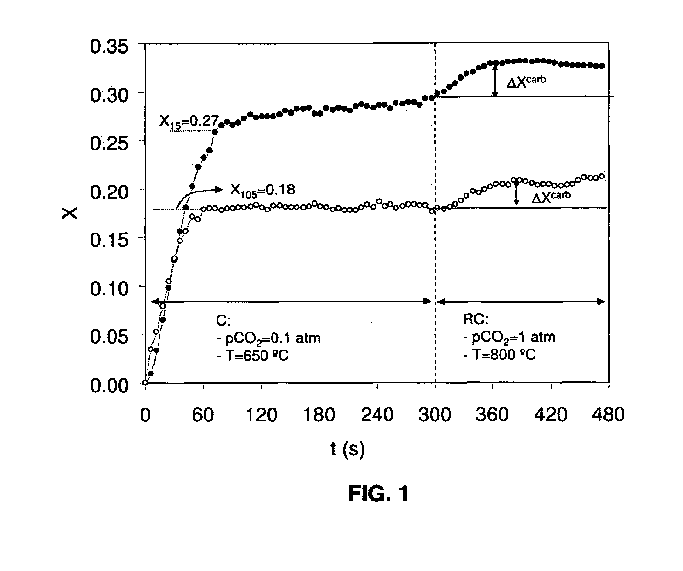

**Figure 1****:** shows a graph representing the evolution over time of the conversion of CaO to CaCO₃, X, (or molar fraction of carbonate) in two kinetic tests carried out in a thermobalance, for particles with a number of calcination-carbonation cycles of 15 and 105. These kinetic tests comprise a first carbonation step during 300 seconds, with a partial CO₂ pressure of 0.1 atmospheres at 650°C, followed by a recarbonation step during 180 additional seconds with a partial CO₂ pressure of 1 atmosphere at 800 °C. The limestone precursor of CaO has more than 98% CaCO₃ and a diameter of 0.063-0.200 mm in both graphics.

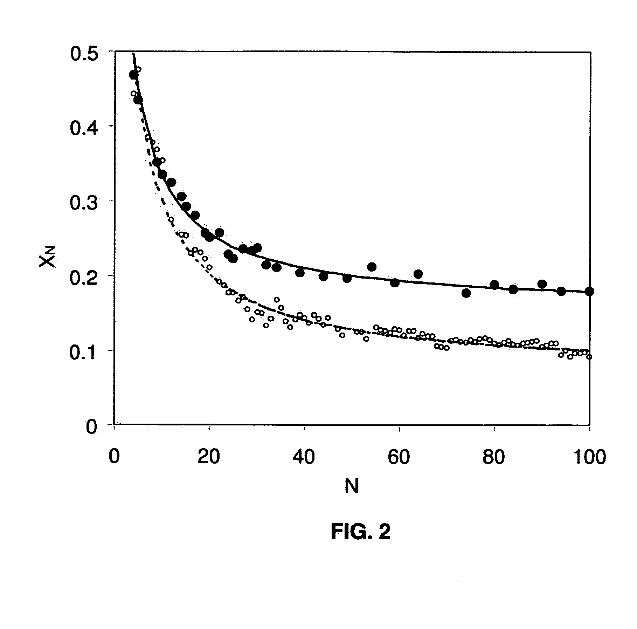

**Figure 2****:** shows a graphic representing the evolution of the effective CO₂ carrying capacity, X_{N}, against the number of calcination-carbonation cycles in two thermobalance tests. One corresponds to a typical test, with results identical to others described in the state of the art, where the carbonation step lasts 5 minutes, with a partial CO₂ pressure of 0.1 atmospheres at 650°C. The other corresponds to a test with the same carbonation and calcination conditions as the previous, but where an additional recarbonation step is performed during three minutes with a partial CO₂ pressure of 1 atmosphere at 800°C between the carbonation and calcination step. Limestone and particle size as in Figure 1.

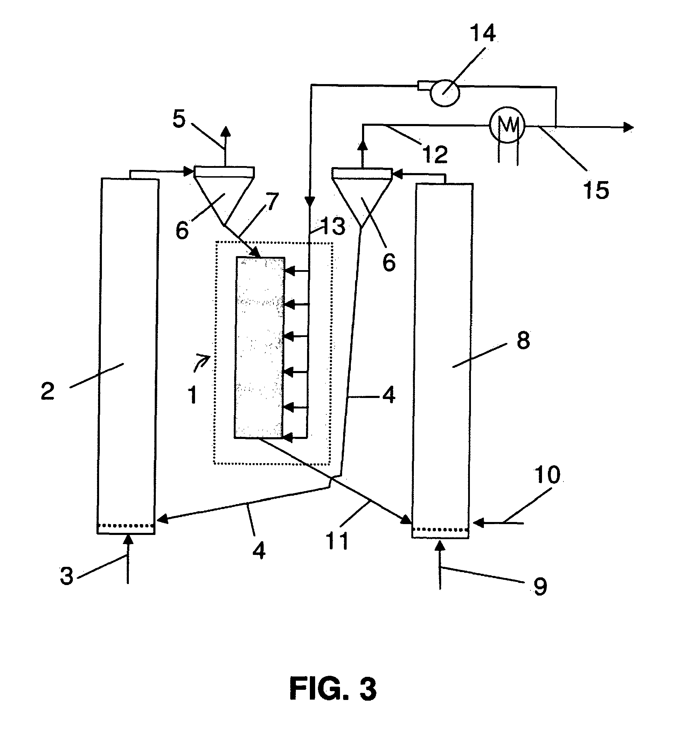

**Figure 3****:** shows a diagram of the device object of the invention, comprising a moving bed recarbonator integrated in a CO₂ capture method diagram of coal flue gases.

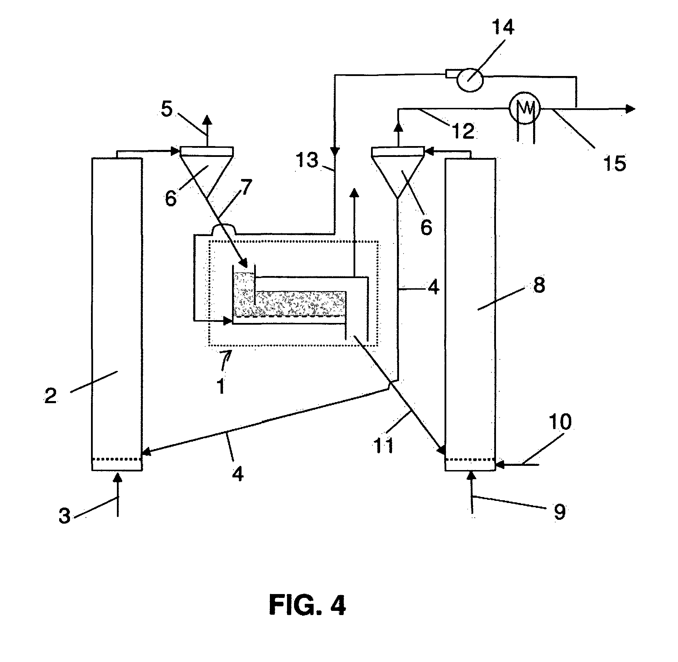

**Figure 4****:** shows another diagram of the device object of the invention, comprising a fluidized bed recarbonator integrated in a CO₂ capture method diagram of coal flue gases.

### PREFERRED EMBODIMENT OF THE INVENTION

The basis of operation of the devices of the invention are illustrated in the graphics of Figure 1 and 2, which include, as shown in Figure 1, an example of experimental curve of the time evolution of the molar conversion of CaO to CaCO₃ during a typical test in thermobalance in conditions close to those existing in a carbonator reactor such as those described in the state of the art for the capture of CO₂ from flue gases. In this Figure 1 it is possible to observe two reaction periods well known in the state of the art on carbonation reaction C: a first period of fast carbonation reaction, which in this example occurs in the first 60 seconds, where X_{N} conversions are reached, of approximately X₁₅=0.27 and X₁₀₅=0.18 (mol of CaCO₃ formed/total mol of CaO) respectively, followed by a slow reaction period controlled by the diffusion of CO₂ through the layer of CaCO₃ formed on the inner surface of CaO, the cycle 15 being that shown in filled points and cycle 105 that shown in empty points. It is also known in the state of the art that the only useful section for the capture of CO₂ from flue gases at atmospheric pressure where this gas is found diluted, by the carbonation of CaO brought into contact with said gases, is the fast reaction section. Therefore, X_{N} defines the effective CO₂ carrying capacity of a CaO particle in the carbonator.

As can also be seen in Figure 1, the research carried out on the carbonation mechanism reveals that when the carbonation conditions are changed towards conditions of higher temperatures (800°C) and partial CO₂ pressure (pure CO₂ at 1 atm), which we will call recarbonation step RC, the carbonation conversion will evolve above the so-called effective CO₂ carrying capacity, X_{N}, the material gaining a small additional conversion, ΔX^{carb}. This matchs up qualitatively with similar observations described in the state of the art, although it is important to highlight here that, as observed in these examples, the recarbonation process produced in these new carbonation conditions, and which cause an increase in conversion, ΔX^{carb}, is produced in relatively short reaction times.

On the other hand, as has already been discussed, it is known that as the number of calcination-carbonation cycles, N, increases, the value of the effective CO₂ carrying capacity, X_{N} decreases. This is observed by comparing the two cycles, 15 and 105, of the example of Figure 1. To illustrate this effect for a greater number of cycles, Figure 2 shows an example of the evolution of X_{N} with the number of cycles in the limestone used in the example, which has more than 98% CaCO₃ and a diameter of 0.063-0.200 mm and which has a similar behaviour to many others reported in the state of the art. This Figure 2 also represents the evolution of X_{N} with the number of cycles in the limestone used in the example when an additional recarbonation step is carried out such as those indicated in Figure 1, just after a carbonation step and just before a calcination step in each cycle. It is possible to observe in this figure of the example that the CO₂ carrying capacity of the sorbent has substantially improved due to the inclusion in each cycle of a new recarbonation step. Despite the modest additional conversion value, ΔX^{carb}, reached in each cycle after the recarbonation, improvements are achieved in the effective CO₂ carrying capacity, X_{N}, of more than 0.1 net points of conversion after 100 cycles.

Therefore, the theoretical basis of the present invention consists of forcing a small recarbonation of the CaO above its effective CO₂ carrying capacity, X_{N}, in a magnitude equal to the loss of effective CO₂ carrying capacity that said sorbent is about to undergo in the following calcination and carbonation cycle. In ideal conditions of reaction and reversibility, considering now as example the case of the cycle 105 in Figures 1 and 2, it is possible to demonstrate that a recarbonation of just approximately 0.005 conversion points, ΔX^{carb}, above the effective CO₂ carrying capacity, X₁₀₅=0.18, of that cycle, would be sufficient to compensate for the loss of activity that the CaO will undergo in its following calcination-carbonation cycle (X₁₀₆). Therefore, and in theory, the recarbonation reaction introduced between each carbonation and calcination step, as shown in the curve of filled points of Figure 2, would have the effect of checking the drop in CO₂ carrying capacity in the CaO in a stable conversion value of 0.18, very favourable with respect to the typical value of residual activity of this sorbent, which is around 0.07 as indicated by the tendency of the empty points curve of Figure 2.

In practice, due to natural deviations of an ideal homogeneous carbonation model, to achieve the desired stability in the effective CO₂ carrying capacity, it is necessary to work with ΔX^{carb} values above the theoretical minimum. In the illustrative example of Figure 2, and with the limestone chosen as example, it has been observed that the increase in the carbonate fraction in the recarbonation step is found in the range 0.02-0.04 mol CaCO₃/mol Ca, and the effective CO₂ carrying capacity of the sorbent is maintained between 0.15 and 0.20 mol CaCO₃/mol Ca. Figure 1 indicates that this would be possible maintaining the sorbent in an environment of pure CO₂ at 800°C during approximately 60 seconds.

It is important to highlight that the recarbonator can be designed to work with operating conditions different from those of the example shown in Figures 1 and 2, so that different recarbonation conversions ΔX^{carb} can be reached and thus maintain the effective CO₂ carrying capacity of the sorbent at a value different to that used in Figures 1 and 2. As illustrated in the example of Figure 1, the choice of residence times in the solids in the carbonator much lower than 50 s, seeking small recarbonator sizes, do not sufficiently make use of the advantages of the recarbonation step. The choice of residence times much greater than 200 s may lead to large recarbonator reactor sizes, without great improvements in the ΔX^{carb} value. The results of Figure 1 and 2 indicate reasonable values of effective CO₂ carrying capacity of the sorbent in a capture system around 0.15 and 0.20, which can be reached with residence times of solids in the recarbonator between 50-200 s and temperatures between 650°-850 °C in the recarbonator operating in CO₂ rich atmospheres.

As has been shown, the contact times between partially carbonated CaO and CO₂ during recarbonation are sufficiently short to consider design and operation conditions of a new device for the improved capture of CO₂ by CaO object of the present invention, as illustrated in Figure 3, which tries to exploit the benefits described when a recarbonation step is introduced by a recarbonator between each carbonation and calcination step.

The recarbonator reactor device (1) object of the invention and shown in Figures 3 and 4 has been integrated in a CO₂ capture system from flue gases by calcination-carbonation (or "postcombustion carbonate looping" or "postcombustion calcium looping") which forms part of the state of the art. Said CO₂ capture system incorporates a circulating fluidized bed carbonator reactor (2) which captures the CO₂ contained in the flue gas stream (3), which operates at temperatures close to 650° C, which is fed from a solid stream rich in CaO (4), and which generates a stream of decarbonated gases (5), which are separated in a cyclone (6) of a stream of partially carbonated solids (7), which constitutes the feed to the recarbonator reactor (1). The solid stream rich in CaO (4), i.e. of calcined solids, comes from a circulating fluidized bed calciner reactor (8) which operates at temperatures normally above 900 °C and which burns fuel (9), with a mixture of O₂/CO₂ (10) to calcine the recarbonated solids stream (11) from the outlet of the recarbonator reactor (1) and generate a gas stream concentrated in CO₂ (12), which is separated from the solid stream rich in CaO (4) in another cyclone (6).

In Figure 3, the recarbonator reactor (1) is a vertical moving bed with concentrated CO₂ stream (13) feed at different heights. Said feed may be distributed axially in terms of locating the injection points and the CO₂ flow rate, trying to adapt the injected CO₂ per unit of length to the expected consumption in the carbonation and recarbonation reaction of the partially carbonated solids (7) which enter the recarbonator reactor (1). In a preferred embodiment, the concentrated CO₂ stream (13) feed is performed by recycling with a blower (14) or similar a part of the concentrated CO₂ stream (15) which is cooled in a cooling and purification step of the gas stream concentrated in CO₂ (12).

Since the recarbonation reaction is exothermic, and the recarbonator reactor (1) operates in adiabatic conditions, depending on the initial temperature of the stream of partially carbonated solids (7) which comes from the carbonator reactor (2) and of the temperature of the concentrated CO₂ stream (13) supplied to the recarbonator reactor (1), which may be introduced at ambient or preheated temperature, the recarbonation temperature is between 650° and 850° C and the duration of this step is between 50 and 200 seconds.

The concentrated CO₂ stream (13) which is supplied at different heights of the recarbonator reactor (1), manages to progressively recarbonate the stream of partially carbonated solids (7) until carbonation conversion values that are slightly above the effective CO₂ carrying capacity of the solids at the end of the carbonation step which takes place in the carbonator reactor (2). As the recarbonator reactor (1) emits a recarbonated solids stream (11) which is supplied to the calciner reactor (8) for its regeneration in a gas stream concentrated in CO₂ (12) and a solid stream rich in CaO (4), part of the gas stream concentrated in CO₂ (12) generated in the calciner reactor (8) is recycled once cooled and conditioned to the recarbonator reactor (1), for which reason this particular method of Figure 3 is characterized in that the concentrated CO₂ stream (13) is also supplied at a temperature below the outlet temperature of the recarbonated solids stream (11) of the recarbonator reactor (1).

The additional recarbonation of the stream of partially carbonated solids (7) in the recarbonator reactor (1) compensates the loss of effective CO₂ carrying capacity that the solids are going to undergo during their calcination in the calciner reactor (8) and later carbonation in the carbonator reactor (2), therefore maintaining the effective CO₂ carrying capacity of the partially carbonated solids (7) in the carbonator reactor (2) at a value greater than that which would be obtained with a carbonator (2)-calciner (8) reactor system without recarbonator reactor (1). This also allows a greater reaction rate of the solids in the carbonator reactor (2), which leads to greater efficiencies of CO₂ capture in said carbonator reactor (2) and greater degrees of carbonation of the solids that exit the carbonator reactor (2). This reduces the flowrate of solids between the carbonator reactor (2) and the calciner reactor (8) and therefore the heat requirements in the step that takes part in the calciner reactor (8). In general, the inclusion of the recarbonator reactor (1) in any of the methods described in the state of the art of CO₂ capture by carbonation or "carbonate looping" or "calcium looping" described in the state of the art, has the same benefits as other reactivation processes of the sorbent or of use of synthetic sorbents with greater effective CO₂ carrying capacities, or involves a saving in the feed requirements of fresh sorbent to the system to maintain a certain effective CO₂ carrying capacity fixed in the design. But the following additional advantages must be highlighted compared to said methods:
- The recarbonation reaction in the recarbonator reactor (1) is exothermic and is produced at temperatures equal to or greater than those existing in the carbonator reactor (2). Therefore, there are no relevant energy penalties associated to the cooling of this stream of solids for its reactivation (as is the case, for example, in methods proposed in the state of the art for the reactivation of CaO making use of the reaction of CaO with H₂O to form Ca(OH)₂, which usually opt for temperatures lower than 500°C).
- Since it operates in adiabatic conditions, the additional heat demand associated to the calcination of the recarbonated CaCO₃ in the recarbonator reactor (1) must be close to the heat given off in the recarbonation process in the recarbonator reactor (1). Therefore, neither is there any relevant energy penalties associated to the calcination of the additional recarbonated solids stream (11) formed in the recarbonator reactor (1).
- There is no consumption of reagents (as in reactivation processes with steam or in processes that require synthetic supports or binders for the CaO) different to the materials and gaseous streams already available in the process.
- The consumption of CO₂ in the recarbonator reactor (1) is just a small fraction of the CO₂ contained in the flue gas stream (3) captured in the carbonator reactor (2) or of the gas stream concentrated in CO₂ (12) generated in the calciner reactor (8).

In other embodiments, design methodologies of moving bed reactors are considered and the auxiliary devices to set a feed of CO₂ to the recarbonator reactor (1) in the suitable pressure and temperature conditions, bearing in mind the availability of CO₂ at high temperature in the gas stream concentrated in CO₂ (12) which exits the calciner reactor (8) of Figure 4 and in the gas stream concentrated in CO₂ (12) at low temperature from which the concentrated CO₂ stream (13), which supplies the recarbonator reactor (1) in the example of Figure 3, is extracted. A heat exchange step can also be included (not included in the figure for reasons of simplicity) for the concentrated CO₂ stream (13), using heat from the solid stream rich in CaO (4) or similar. The CO₂ progressively disappears from the gas phase of the concentrated CO₂ stream (13), which makes recommendable the feed at various points throughout the height of the recarbonator reactor (1), thus also minimizing the pumping pressure requirements of the blower (14) of CO₂ to the recarbonator reactor (1).

In another particular embodiment shown in Figure 4, the recarbonator reactor (1) is a bubbling fluidized bed with the flow rate of the concentrated CO₂ stream (13) entering through an inlet pipe which is arranged in the lower part of the bed which it fluidizes. There may be an auxiliary gas, preferably steam, in the fluidization of this solids bed, which may also have positive effects on the acceleration of the recarbonation reaction.

In the example of device and method of Figure 4, the recarbonator reactor (1) comprises a bubbling fluidized bed reactor operating in adiabatic conditions supplied by the stream of partially carbonated solids (7), which advance towards the outlet reacting with the concentrated CO₂ stream (13) which is supplied to the recarbonator reactor (1) in sufficient quantity to fluidize the stream of partially carbonated solids (7), and where the progressive recarbonation of said stream of solids occurs. This recarbonator may operate, as is illustrated in Figure 4, as a over-sized "loop seal" or valve of solids to give sufficient residence time to the solids or as an auxiliary fluidized bed, such as those used for heat extraction in the state of the art of circulating fluidized bed combustion boilers. The recarbonator reactor (1) may accommodate devices which form part of the state of the art to distribute the CO₂ so that the solids are preferably directed from the inlet point to the solids discharge point, thus homogenizing the contact time of the solids with the CO₂-rich gas. The recarbonator reactor (1) emits a recarbonated solids stream (11) which is supplied to the calciner reactor (8) for its regeneration as solid stream rich in CaO (4) and gas stream concentrated in CO₂ (12). Part of the gas stream concentrated in CO₂ (15) generated in the calciner reactor (8) is recycled to the recarbonator reactor (1) as concentrated CO₂ stream (13).

In another particular embodiment, the recarbonator reactor (1) is a set of fluidized beds in series with respect to the recarbonated solids stream (11). The stream of partially carbonated solids (7) is supplied to the bed positioned at a greater height, which reacts with a part of the concentrated CO₂ stream (13) from the calcination step. The stream of partially carbonated solids (7) are recarbonated in this step and increase their temperature due to the heat released during the recarbonation and drop after a certain contact time towards lower stages, where the process is repeated coming into contact with new gas fractions from the concentrated CO₂ stream (13). This type of devices or similar, where a close gas-solid contact and an effective heat exchange between gases and solids is produced, are part of the state of the art in other processes of the chemical and cement industry (for example, Dorr-Oliver process). As is the case in said processes, what is sought in this configuration is to achieve a sufficiently high solid-gas contact time, minimizing the height of a bed if it is compared with the option of a sole fluidized bed and closer to the ideal between two fluids exchanging heat in counterflow direction. For the case of the device object of this invention, the greater mechanical complexity of these systems is evident with respect to the configurations of Figures 3 and 4; but this greater complexity and cost can be compensated by the greater degree of carbonation of the stream of partially carbonated solids (7) and by the greater degree of preheating of the recarbonated solids stream (11).

The following examples and drawings are provided by way of illustration and do not aim to be limiting of the present invention.

### EXAMPLE

A design exercise of the device of the invention is performed below to which reference (1) in Figure 3 has been assigned, considering the use of said device in an example applicable to a CO₂ capture system from coal flue gases. In terms of CaO particles circulating in the system, we suppose an effective CO₂ carrying capacity of 0.18 (see Figure 1 and 2). Let us assume a conversion of said particles at the outlet of the carbonator (2) (0.17 for this example) close to its effective carrying capacity (0.18). In accordance with the discussion previously performed and adopting as an example the conditions chosen in Figures 1 and 2, it is necessary to design the recarbonator reactor (1) to achieve a final conversion at the outlet of the recarbonator reactor (1) of at least 0.21 (ΔX^{carb} =0.03). This requires contact times between the solids and the CO₂ which is supplied to the carbonator (1) greater than 60 seconds. Anticipating inefficiencies in the reaction process and/or a certain safety factor to reach a conversion of 0.21, it allows us to choose a residence time of the solids in the recarbonator reactor (1) of 100 seconds.

To illustrate the application of the device to a specific case, let us assume that the flue gas stream (3) comes from a coal power station of around 1000 MW power and transports 2 Kmol CO₂/s. Let us also assume, for reasons of simplicity, that the solid stream rich in CaO (4) which reaches the carbonator reactor (2) in charge of capturing 90% of said CO₂ stream, only consists of CaO. This fixes the stream of partially carbonated solids (7) in 11 Kmol Ca/s or, alternatively, 710 kg/s of partially carbonated solids. In moving bed conditions, this entails that the recarbonator reactor (1) must accommodate 72000 kg of solids, which assuming an average bed density (bulk) of 800 kg/m³ involves approximately 90 m³ of recarbonator reactor (1). If we assume a height of 10 m of recarbonator reactor (1), it gives a transverse surface of 9 m², which is favourably compared with the 200 m² that are necessary in the circulating bed carbonator reactor (2) used for CO₂ absorption (assuming a typical molar stream of CO₂ in these reactors of 8-10 mol CO_{2/}m²s)

The consumption of concentrated CO₂ stream (13) in the recarbonator reactor (1) described in this example, would be of 20 kg/s, which entails 3 % of the total CO₂ which exits the calciner reactor (8) through the gas stream concentrated in CO₂ (12). The stream of CO₂ from the calciner reactor (8), of 600 Kg/s, has been calculated operating in adiabatic conditions burning fuel (9) with a mixture of O₂/CO₂ (10) in typical conditions (25% O₂) and bearing in mind that it has been demonstrated in the state of the art that said calciner reactor (8) usually has a power comparable to that of the power station wherefrom the flue gases (3) come, i.e. 1000 MW. With respect to the stream of CO₂ captured from the flue gas stream (3), in the carbonator reactor (2) and that produced by combustion of the fuel (9) in the calciner reactor (8), the concentrated CO₂ stream (13) entails less than 10%.

From the concentrated CO₂ stream (13), and assuming a maximum velocity of the gas of 0.03 m/s (in normal conditions) in the CO₂ injection points in the recarbonator reactor (1), it is possible to estimate that the number of injection points necessary in the recarbonator reactor (1) is of approximately 40. However, the reaction kinetics are slow in the majority of the recarbonator reactor (1) except in the section of complete carbonation of the solids until its effective CO₂ carrying capacity, X_{N}, (0.17 to 0.18 in the example), which can be performed by a greater feed of CO₂ in the upper part of the recarbonator reactor (1). In the rest of the recarbonator reactor (1), the CO₂ injection can be designed to permit the complete disappearance of the CO₂ injected in a point close to the arrival of the solids to the following point, thus minimizing the streams of CO₂ and pressure losses in the necessary step of CO₂ pumping to the recarbonator reactor (1).

Since the carbonation reaction which takes place in the recarbonator reactor (1) is exothermic, it can be demonstrated with a heat balance that even the CO₂ feed in the concentrated CO₂ stream (13) at ambient temperature entails a heating of 65°C of the recarbonated solids stream (11) resulting from the recarbonator reactor (1) (assuming an average heat capacity of the gases of 850 J/kg°C and the solids of 1000 J/kg°C). Said recarbonated solids stream (11) is finally directed to the calciner reactor (8), which operates at temperatures higher than 900°C to allow the calcination of recarbonated solids (11) in a solid stream rich in CaO (4) and streams of gases concentrated in CO₂ (12) which may undergo one or several steps of cooling, vapour condensation and conditioning, part of the state of the art, before it recycling to the recarbonator reactor (1).

In other embodiments, the solids that circulate between the carbonator reactor (2) and the calciner reactor (8) also have other inactive limestone derived compounds (such as CaSO₄) and other non-limestone derived compounds (such as ashes).

A design example similar to the previous can be designed where the recarbonator reactor (1) is a bubbling fluidized bed (Figure 4). In this example, it is attempted to minimize the volume of the recarbonator reactor looking for conditions that result in an effective CO₂ carrying capacity of 0.15, slightly lower than the example of Figures 1 and 2. Let us suppose a conversion of said particles at the outlet of the carbonator reactor (1) of 0.14 for this example, close to its effective carrying capacity (0.15). Let us now suppose that ΔX^{carb} =0.02, so that the final conversion at the outlet of the recarbonator reactor (1) is 0.17. This requires contact times between the solids and the CO₂ which is supplied to the carbonator reactor (1) lower than those used in the example of Figure 3. In view of the results shown in Figure 1, it is possible to estimate that the residence time of the solids in the recarbonator reactor (1) must be 50 seconds. Let us assume for the example of Figure 4 that the flue gas stream (3) comes from a coal power station of round 1000 MW power and transports 2 Kmol CO₂/s. Let us also assume, for reasons of simplicity, that the solid stream rich in CaO (4) which reaches carbonator reactor (2) in charge of capturing 90% of said CO₂ stream, only consists of CaO. This fixes the stream of partially carbonated solids (7) in 14 Kmol Ca/s or, what is the same, 730 kg/s of partially carbonated solids. In moving bed conditions and for an average residence time of 50 s, this entails that the recarbonator reactor (1) must accommodate 43000 kg of solids, which assuming an average bed density (bulk) of 800 kg/m³ involves approximately 55 m³ of recarbonator reactor (1).

The consumption of concentrated CO₂ stream (13) in the recarbonator reactor (1) described in this example, to carbonate the solids until a value of 0.17 would be of 18 kg/s. However, to fluidize the recarbonator reactor it is necessary to introduce an excess of concentrated CO₂ stream (13), which in this example has entailed 30 %.

In this example, the assumption has also been adopted that the concentrated CO₂ which is supplied to the recarbonator reactor is preheated to achieve better operating temperatures in the recarbonator reactor. If the recarbonator reactor is designed as bubbling fluidized bed operating at 1.5 m/s (typical value that can be found in the loop-seals of the circulating fluidized bed combustors) the section thereof must be 30 m². From this section and from the necessary volume to have a residence time of 50 s, a bed height of 2.0 m can be estimated. Assuming that the concentrated CO₂ stream (13) can be preheated to 500 °C before entering the recarbonator reactor (1), an exit temperature of the recarbonated solids (11) in the order of 710 °C can be calculated.

## Claims

1. A device for CO2 capture by carbonation of CaO, that comprises:
• a carbonator reactor (2) comprising an inlet pipe for feeding flue gases (3) and another inlet pipe for feeding a solid stream rich in CaO (4) that comes from a calciner reactor (8),
• and the calciner reactor (8) comprising an inlet pipe to introduce a stream of solids with CaCO₃ (11), that are calcined to a solid stream rich in CaO (4) and a gas stream concentrated in CO₂ (12) **characterized by** the inclusion of a recarbonator reactor (1) that comprises:
• an inlet pipe for feeding the stream of partially carbonated solids (7) coming from the carbonator reactor (2),
• another inlet pipe for feeding a concentrated CO₂ stream (13) coming from the calciner reactor (8) in such a way that the carbonate fraction in the partially carbonated solids increases above the effective CO₂ carrying capacity of the solids in the carbonator (2),
• an outlet pipe for feeding the stream of recarbonated solids (11) from the recarbonator reactor to the calciner reactor (8).

2. A device according to claim 1, wherein the recarbonator reactor (1) is a vertical moving bed with a feed of concentrated CO₂ stream at different heights.

3. A device according to claim 1, wherein the recarbonator reactor (1) is a bubbling fluidized bed.

4. A device according to claim 3, wherein the bubbling fluidized bed is a solid loop seal between the carbonator and calciner reactors.

5. A device according to claim 1, wherein the recarbonator reactor (1) is a group of fluidized beds in series respect to the stream of recarbonated solids.

6. A method for CO₂ capture by carbonation of CaO that comprises the following steps:
- carbonation of a solid stream rich in CaO (4) that captures the CO₂ contained in a combustion flue gas stream (3) to form a partially carbonated solid stream (7).
- calcination of a solid stream with CaCO₃ by means of the combustion of a fuel (9) in the presence of a mixture of O₂/CO₂ (10)
**characterized by** the introduction of a recarbonation step between the carbonation step and the calcination step, where the partially carbonated solid stream (7) obtained from the carbonation step is brought into contact with a concentrated CO₂ stream (13) obtained from the calcination step, in order to obtain a recarbonated solids stream (11) with a carbonate fraction above the effective CO₂ carrying capacity of the solids in the carbonator (2).

7. A method according to claim 6 wherein the temperature in the recarbonation step is between 650° and 850° C, and the recarbonation step is between 50 and 200 seconds long.

8. A method according to claim 7 wherein the increase in the carbonate fraction in the recarbonation step is within the interval of 0.02-0.04 (mol CaCO₃/mol Ca), and the CO₂ carrying capacity of the sorbent is mantained between 0.15-0.20 (mol CaCO₃/mol Ca).

9. A method according to claim 6-8 wherein the concentrated CO₂ stream (13) is cooled down in a cooling and purification step of the CO₂ rich gas stream (12).

10. A method according to claim 6 wherein the concentrated CO₂ stream (13) is preheated before it is introduced to the recarbonator reactor (1).

## Patentansprüche

1. Eine Vorrichtung zur CO₂-Abscheidung durch Karbonisierung von CaO, bestehend aus:
• einem Karbonisierungsreaktor (2), bestehend aus einem Einlassrohr zur Speisung von Rauchgasen (3) und einem weiteren Einlassrohr zur Speisung eines CaO-reichen Feststoffstroms (4), der von einem Kalzinierreaktor kommt (8),
• und dem Kalzinierreaktor (8), bestehend aus einem Einlassrohr zur Zuführung eines Feststoffstroms mit CaCO₃ (11), die zu einem CaO-reichen Feststoffstrom (4) und einem konzentrierten CO₂-Gasstrom (12) kalziniert werden, **gekennzeichnet durch** den Einschluss eines Rekarbonisierungsreaktors (1), bestehend aus:
• einem Einlassrohr zur Speisung des Stroms aus partiell karbonisierten Feststoffen (7), der vom Karbonisierungsreaktor kommt (2),
• einem weiteren Einlassrohr zur Speisung eines konzentrierten CO₂-Stroms (13), der vom Kalzinierreaktor (8) kommt, auf eine Art und Weise, dass der karbonisierte Anteil der partiell karbonisierten Feststoffe über die effektive CO₂-Aufnahmekapazität der Feststoffe im Karbonator (2) steigt,
• ein Auslassrohr zur Speisung des Stroms aus rekarbonisierten Feststoffen (11) vom Rekarbonisierungsreaktor zum Kalzinierreaktor (8).

2. Eine Vorrichtung nach Anspruch 1, **gekennzeichnet dadurch, dass** der Rekarbonisierungsreaktor (1) ein sich vertikal bewegendes Bett mit Zuführung eines konzentrierten CO₂-Stroms in verschiedenen Höhen ist.

3. Eine Vorrichtung nach Anspruch 1, **gekennzeichnet dadurch, dass** der Rekarbonisierungsreaktor (1) ein blasenbildendes Wirbelschichtbett ist.

4. Eine Vorrichtung nach Anspruch 3, **gekennzeichnet dadurch, dass** das blasenbildende Wirbelschichtbett eine Feststoff-Schlaufendichtung zwischen dem Karbonator- und dem Kalzinierreaktor ist.

5. Eine Vorrichtung nach Anspruch 1, **gekennzeichnet dadurch, dass** der Rekarbonisierungsreaktor (1) eine Gruppe von Wirbelschichtbetten in Serienschaltung zum Strom aus rekarbonisierten Feststoffen ist.

6. Eine Methode zur CO₂-Abscheidung durch Karbonisierung von CaO, bestehend aus den folgenden Schritten:
- Karbonisierung eines CaO-reichen Feststoffstroms (4), der das in einem Kombustions-Rauchgasstrom (3) enthaltene CO₂ abscheidet, um einen partiell karbonisierten Feststoffstrom (7) zu bilden.
- Kalzinierung eines Feststoffstroms mit CaCO₃ durch die Kombustion eines Kraftstoffs (9) in Gegenwart einer Mischung aus O₂/CO₂ (10),
**gekennzeichnet durch** die Einführung eines Rekarbonisierungsschrittes zwischen dem Karbonisierungsschritt und dem Kalzinierungsschritt, wobei der partiell karbonisierte Feststoffstrom (7), der aus dem Karbonisierungsschritt hervorgeht, mit einem konzentrierten CO₂-Strom (13) in Kontakt gebracht wird, der aus dem Kalzinierungsschritt hervorgeht, um einen Strom aus rekarbonisierten Feststoffen (11) mit einem karbonisierten Anteil über der effektiven CO₂-Aufnahmekapazität der Feststoffe im Karbonator (2) zu erhalten.

7. Eine Methode nach Anspruch 6, **gekennzeichnet dadurch, dass** die Temperatur im Rekarbonisierungsschritt zwischen 6500 und 8500 C liegt und die Dauer des Rekarbonisierungschrittes zwischen 50 und 200 Sekunden beträgt.

8. Eine Methode nach Anspruch 7, **gekennzeichnet dadurch, dass** der Anstieg des karbonisierten Anteils im Rekarbonisierungsschritt innerhalb des Intervalls von 0,02-0,04 (mol CaCO₃/mol Ca) liegt, und die CO₂-Aufnahmekapazität des Sorptionsmittels zwischen 0,15-0,20 (mol CaCO₃/mol Ca) gehalten wird.

9. Eine Methode nach Ansprüchen 6-8, **gekennzeichnet dadurch, dass** der konzentrierte CO₂-Strom (13) in einem Kühl- und Reinigungsschritt des CO₂-reichen Gasstroms (12) abgekühlt wird.

10. Eine Methode nach Anspruch 6, **gekennzeichnet dadurch, dass** der konzentrierte CO₂-Strom (13) vorgewärmt wird, bevor er dem Rekarbonisierungsreaktor zugeführt wird.

## Revendications

1. Un dispositif pour la capture de CO₂ par carbonatation de CaO, qui comprend :
• Un réacteur de carbonatation (2) comprenant un tuyau d'entrée pour l'alimentation avec un gaz de combustion (3) et un autre tuyau d'entrée pour l'alimentation avec un flux de solides riches en CaO (4) qui provient d'un réacteur calcinateur (8),
• et le réacteur calcinateur (8) comprenant un tuyau d'entrée pour introduire un flux de solides avec CaCO₃ (11), qui sont calcinés dans un flux de solides riches en CaO (4) et un flux de gaz concentrés en CO₂ (12) **caractérisé par** l'inclusion d'un réacteur de recarbonatation (1) qui comprend :
• un tuyau d'entrée pour l'alimentation avec le flux de solides partiellement carbonatés (7) provenant du réacteur de carbonatation (2),
• un autre tuyau d'entrée pour l'alimentation avec un flux de CO₂ concentré (13) provenant du réacteur calcinateur (8) pour que la fraction de carbonate dans les solides partiellement carbonatés augmente au-dessus de la capacité de charge en CO₂ effective des solides dans le carbonateur (2),
• un tuyau de sortie pour l'alimentation avec le flux de solides recarbonatés (11) provenant du réacteur de recarbonatation dans le réacteur calcinateur (8).

2. Un dispositif selon la revendication 1, dans lequel le réacteur de recarbonatation (1) est un lit mobile vertical avec une alimentation avec un flux de CO₂ concentré à différentes hauteurs.

3. Un dispositif selon la revendication 1, dans lequel le réacteur de recarbonatation (1) est un lit fluidisé bouillonnant

4. Un dispositif selon la revendication 3, dans lequel le lit fluidisé bouillonnant est un joint à boucle solide entre les réacteurs de carbonatation et calcinateur.

5. Un dispositif selon la revendication 1, dans lequel le réacteur de recarbonatation (1) est un groupe de lits fluidisés en séries par rapport au flux de solides recarbonatés.

6. Un procédé pour la capture de CO₂ par carbonatation de CaO qui comprend les étapes suivantes :
- carbonatation d'un flux de solides riches en CaO (4) qui capture le CO₂ contenu dans un flux de gaz de combustion (3) pour former un flux de solides partiellement carbonatés (7).
- calcination d'un flux de solides avec CaCO₃ par la combustion d'un combustible (9) en présence d'un mélange de O₂/CO₂ (10)
**caractérisé par** l'introduction d'une étape de recarbonatation entre l'étape de carbonatation et l'étape de calcination, où le flux de solides partiellement carbonatés (7) obtenu à partir de l'étape de carbonatation est amené au contact d'un flux de CO₂ concentré (13) obtenu à partir de l'étape de calcination, afin d'obtenir un flux de solides recarbonatés (11) avec une fraction de carbonate au-dessus de la capacité de charge en CO₂ effective des solides dans le carbonateur (2).

7. Un procédé selon la revendication 6, dans lequel la température dans l'étape de recarbonatation est comprise entre 650° et 850° C, et la durée de l'étape de recarbonatation est comprise entre 50 et 200 secondes.

8. Un procédé selon la revendication 7, dans lequel l'augmentation de la fraction de carbonate dans l'étape de recarbonatation se situe dans l'intervalle de 0,02-0,04 (mol CaCO₃/mol Ca), et la capacité de charge en CO₂ du sorbant est maintenue entre 0,15-0,20 (mol CaCO₃/mol Ca).

9. Un procédé selon les revendications 6-8, dans lequel le flux de CO₂ concentré (13) est refroidi au cours d'une étape de refroidissement et de purification du flux de gaz riches en CO₂ (12).

10. Un procédé selon la revendication 6, dans lequel le flux de CO₂ concentré (13) est préchauffé avant d'être introduit dans le réacteur de recarbonatation (1).
